## Europäisches Patentamt
## European Patent Office
## Office européen des brevets

(11) Veröffentlichungsnummer: **0 078 457**
**B1**

(12)

# EUROPÄISCHE PATENTSCHRIFT

(45) Veröffentlichungstag der Patentschrift:
**06.08.86**

(51) Int. Cl.⁴: **G 02 F 1/17**

(21) Anmeldenummer: **82109720.1**

(22) Anmeldetag: **21.10.82**

(54) **Verfahren und Vorrichtung zur zeitweisen Erhöhung des Absorptionsgrades von transmittierenden optischen Bauelementen.**

(30) Priorität: **29.10.81 DE 3142908**

(43) Veröffentlichungstag der Anmeldung:
**11.05.83 Patentblatt 83/19**

(45) Bekanntmachung des Hinweises auf die Patenterteilung:
**06.08.86 Patentblatt 86/32**

(84) Benannte Vertragsstaaten:
**AT CH DE FR GB LI**

(56) Entgegenhaltungen:
**FR - A - 2 328 979**
**FR - A - 2 399 680**
**FR - A - 2 432 194**
**US - A - 3 630 603**

(73) Patentinhaber: **Firma Carl Zeiss, D-7920 Heidenheim (Brenz) (DE)**

(72) Erfinder: **Ballmer, Horst, Dipl.-Ing., Händelstrasse 25, D-7920 Heidenheim (Brenz) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zur zeitweisen Erhöhung des Absorptionsgrades von transmittierenden optischen Bauelementen und einen bestimmten Wert, vorzugsweise von Linsen und Filtern, durch eine elektrochrome Schicht.

In vielen Gebieten der Optik werden transmittierende optische Bauelemente mit veränderbarem Absorptionsgrad verwendet. Ein bekanntes Beispiel sind Brillenlinsen, die zeitweise auch als Sonnenschutzgläser wirken sollen. Dafür sind sogenannte phototrope Gläser bekannt, die im hellen Sonnenlicht durch dessen UV-Anteil dunkler werden und dadurch das Auge vor zu grosser oder unangenehmer Helligkeit schützen. Diese phototropen Gläser haben jedoch den Nachteil, dass die Änderung des Absorptionsgrades zu langsam erfolgt und dass sie hinter den Windschutzscheiben von Autos ungenügend funktionieren.

Transmittierende optische Bauelemente mit zeitweise veränderlichem Absorptionsgrad sind ferner für zahlreiche optische Geräte vorteilhaft. So ist es z.B. oft notwendig, einen Strahlengang zeitweise definiert zu schwächen. Hierfür werden, sog. Grau- oder Neutralfilter verwendet, welche meist mit mechanischen Mitteln in den Strahlengang gebracht werden. Nachteilig ist in diesem Fall, dass eine Automatisierung aufwendig und durch die mechanisch bewegten Teile störanfällig ist.

Aus der FR-A-2 432 194 bzw. US-A-2 432 194 ist eine Anzeige bekannt, die aus einer elektrochromen Sicht und segmentförmigen Elektroden besteht. Die einzelnen Segmente werden zyklisch durch einen Zähler angesteuert, wobei ein Decoder bestimmt, welche Segmente jeweils gefärbt werden. Die den Segmenten zugeführten Ladungsmengen werden durch die Zeitdauer eines vorgegebenen Impulses sowie durch die Dimensionierung der Stromversorgung bestimmt.

Ferner ist aus der DE-A-2 723 412 eine Steuerschaltung für eine Anzeigeeinrichtung bekannt, bei der die einzelnen Segmente mit Konstantstromquellen verbunden sind. Dadurch wird eine Temperaturabhängigkeit des Absorptionsgrades vermieden und damit die Lesbarkeit verbessert. Die Dauer des Färbe- bzw. Entfärbevorganges wird auch in diesem Fall durch die Zeitdauer eines vorgegebenen Impulses (dort als Zeitsteuersignal bezeichnet) bestimmt.

Diese bekannten Steuerungen sind für Anzeigevorrichtungen ausreichend, nicht jedoch für optische Bauteile, deren Durchlassgrad exakt reproduzierbar veränderbar sein soll.

Schliesslich ist aus der FR-A-2 328 979 bzw. aus der DE-A-2 644 528 eine Linse mit elektrochromer Schicht bekannt, welche durch zeitweises Anlegen einer Gleichspannung der einen oder anderen Polarität mehr oder weniger stark gefärbt oder entfärbt wird.

Nachteilig ist in diesem Fall, dass die Schicht zu stark gefärbt und damit zerstört werden kann.

Ausserdem lassen sich auch in diesem Fall keine reproduzierbaren Werte des Absorptionsgrades einstellen.

Der Erfindung liegt daher die Aufgabe zugrunde, ein Verfahren und eine Vorrichtung anzugeben, mit der es möglich ist, den Absorptionsgrad von transmittierenden optischen Bauelementen, vorzugsweise von Linsen und Filtern, durch eine elektrochrome Schicht zeitweise mit guter Reproduzierbarkeit zu erhöhen.

Die gestellte Aufgabe wird gemäss der vorliegenden Erfindung dadurch gelöst, dass der Färbe- und Entfärbevorgang über eine Flipflopschaltung gestartet und gestoppt wird, dass während eines Färbe- oder Entfärbevorganges in dem einen Zustand der Flipflopschaltung der elektrochromen Schicht von zwei begrenzbaren Stromquellen definierte Ladungsmengen zu- bzw. abgeführt werden und von einem Taktgenerator Zählimpulse an einen Zähler gegeben werden, und dass der Zähler beim Erreichen definierter Werte die Flipflopschaltung in den anderen Zustand schaltet und dadurch der Färbe- oder Entfärbevorgang gestoppt wird.

Eine zweckmässige Ausgestaltung der Erfindung zeichnet sich dadurch aus, dass der Färbe und Entfärbevorgang über eine Flipflopschaltung gestartet wird, dass während eines Färbe- oder Entfärbevorganges der elektrochromen Schicht von wezi begrenzbaren Stromquellen Ladungen zu- bzw. abgeführt werden und von einem Taktgenerator Zählimpulse an einen Zähler gegeben werden, und dass der Zähler beim Erreichen definierter Werte über die Flipflopschaltung den Färbe- oder Entfärbevorgang abschaltet.

Eine vorteilhafte Ausführungsform zeichnet sich dadurch aus, dass die elektrochrome Schicht mit zwei begrenzbaren Stromquellen verbunden ist über welche Ladungen zu- bzw. abgeführt werden, dass die Schalteingänge der Stromquellen über Gatter mit den Ausgängen einer Flipflopschaltung und mit dem höchstwertigen Ausgang eines Zählers verbunden sind, dass die Flipflopschaltung über ein Flankendifferenzierglied mit dem zweithöchstwertigen Ausgang des Zählers verbunden ist, dass der Ausgang der Flipflopschaltung mit einem Taktgenerator verbunden ist, welcher während eines Färbe- bzw. Entfärbevorganges Zählimpulse an den Zähler gibt und dass die Flipflopschaltung mit einer Taste zum Auslösen eines Färbe- bzw. Entfärbevorganges verbunden ist.

Die bisher nur für Anzeigeelemente bekannten elektrochromen Schichten verbrauchen nur während einer Änderung ihres Absorptionsgrades Strom, was insbesondere bei nicht stationären Geräten, wie z.B. Sonnenbrillen, ein Vorteil ist.

In einer weiteren Ausführungsform der Erfindung ist der Entfärbestrom kleiner als der Färbestrom, womit der Tatsache Rechnung getragen wird, dass bei einer elektrochromen Schicht zum Färben mehr Ladungen benötigt werden als beim Entfärben ausgeräumt werden können.

In einer bevorzugten Ausführungsform sind für die Stromquellen Transistoren vorgesehen, die über Basiswiderstände in Emitterschaltung angesteuert werden.

Insbesondere für die Verwendung bei Brillen ist es zweckmässig, die Taste zum Auslösen des Färbe- oder Entfärbevorganges als Berührungssensor auszubilden und die elektronischen Bauelemente in Dickschichttechnik oder einer höher integrierenden Technik auszuführen. Bei Brillen können sie dann zusammen mit den zur Stromversorgung notwendigen Batterien in die Brillenfassung eingebaut werden.

In einer besonders vorteilhaften Ausführungsform wird der Färbe- bzw. Entfärbevorgang durch einen optischen Sensor ausgelöst, wobei durch eine mit Hysterese behaftete Schaltung ein zu häufiges Wechseln des Färbezustandes bei Schwankungen um den Schaltpunkt vermieden wird.

Weitere Ausgestaltungen der Erfindung gehen aus den Unteransprüchen hervor.

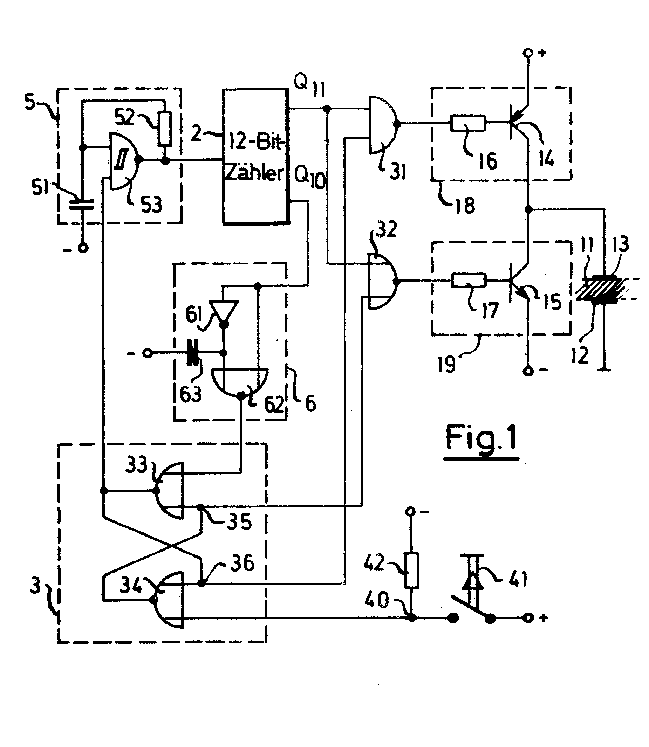

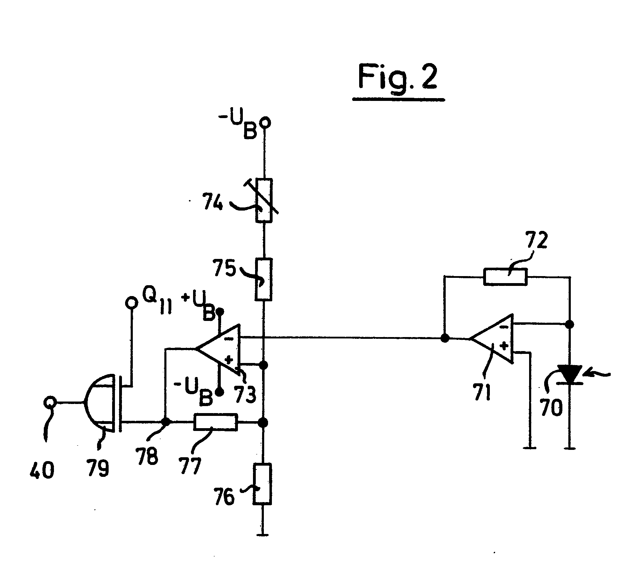

Die Erfindung wird im folgenden anhand der Fig. 1 und 2 näher erläutert. Dabei zeigen:

Fig. 1 ein Ausführungsbeispiel für die Anordnung zur Ladungszu- bzw. -abfuhr für den Färbe- bzw. Entfärbevorgang, wobei die Vorgänge durch eine Taste ausgelöst werden, und

Fig. 2 ein Ausführungsbeispiel für die Auslösung der Färbevorgänge durch einen optischen Sensor.

In Fig. 1 ist mit 11 die elektrochrome Schicht bezeichnet, welche auf eine Linse oder ein anderes optisches Bauelement aufgebracht ist. Die Elektrode 12 der elektrochromen Schicht liegt auf Nullpotential, die Elektrode 13 ist mit den Stromquellen 18 und 19 verbunden. Die begrenzbaren Stromquellen 18 und 19 bestehen aus dem PNP-Transistor 14 und dem NPN-Transistor 15, deren Emitter mit einer positiven und einer negativen Spannungsquelle verbunden sind und deren gemeinsamer Verbindungspunkt mit der elektrochromen Schicht verbunden ist. Die Transistoren 14 und 15 werden über die Basiswiderstände 16 und 17 angesteuert, deren Grösse über die Stromverstärkung der Transistoren alleine den Lade- bzw. Entladestrom für die Schicht im Bedarfsfall begrenzt. Während des Färbens wird der NPN-Transistor 15 durchgesteuert; beim Entfärben der PNP-Transistor 14.

Färbe- bzw. Entfärbestrom für die elektrochrome Schicht 11 werden ein- und ausgeschaltet durch die Verknüpfung mittels des NAND-Gatters 31 bzw. des NOR-Gatters 32 von Ausgangswert des Zählers 2 und Zustand des Flipflops 3.

Der Zähler 2 ist mit dem Taktgenerator 5 verbunden, in dem das der Ladungssteuerung zugrunde liegende Taktsignal durch den Kondensator 51, den Widerstand 52 und das Schmitt-Trigger-NAND-Gatter 53 erzeugt wird. Die in Fig. 1 gezeigte Anordnung enthält ferner ein Flankendifferenzierglied 6 zum Beenden und den Taster 41 zum Auslösen eines Färbe- bzw. Entfärbevorganges.

Nach dem Einschalten der nicht gezeichneten Spannungsversorgung wird zunächst der Zähler 2 – mit einer bekannten, in der Zeichnung nicht dargestellten Einrichtung – mit seinem höchstwertigen Ausgang $Q_{11}$ auf «1» bzw. «H» und mit allen anderen Ausgängen auf «0» bzw. «L» gesetzt. Dieser Zustand charakterisiert den völlig gefärbten Zustand der Schicht; er wird nach dem Einschalten der Spannungsversorgung zunächst einmal angenommen, damit die elektrochrome Schicht – unabhängig von dem Zustand in dem sie sich zufällig befindet – vollständig entfärbt wird. Damit liegt an den Gattern 31 und 32 der $Q_{11}$ zugehörige Eingang auf H».

Das Flipflop 3 bestehend aus den über Kreuz geschalteten NOR-Gattern 33 und 34 kann zwei verschiedene Zustände annehmen, die z.B. am Schaltungspunkt 36 durch «L» oder «H» charakterisiert sind. Dabei hat der Schaltungspunkt 35 immer den invertierten Zustand. Liegt am Schaltungspunkt 36 «0», dann wird die elektrochrome Schicht nicht verändert. Nach dem Einschalten der Stromversorgung kann jeder der beiden Zustände vorliegen. Liegt «H» vor, dann liegen beide Eingänge des NAND-Gatters 31 auf H und die Schicht wird über den Transistor 14 sofort entfärbt. Liegt «0» vor, dann bewirkt die erste Betätigung des Tasters 41 am Ausgang des NOR-Gatters 34 den Zustand «0» und damit auch zu «0» am entsprechenden Eingang des NOR-Gatters 33. Da der zweite Eingang dieses Gatters so lange der Zähler 2 nicht läuft immer «0» ist, entsteht am Ausgang «1» und somit am Schaltungspunkt 36 «H». Dieser Zustand bleibt zunächst unabhängig von weiteren Änderungen am Taster 41. Wenn also beim Einschalten der Stromversorgung die Schicht nicht sofort entfärbt wird und damit eine Betätigung des Tasters 41 wirkungslos bleibt, bewirkt die erste Betätigung des Tasters 41 einen Entfärbevorgang.

Wenn der Schaltungspunkt 36 auf «H» liegt, ist auch der Taktgenerator aktiv und gibt Zählimpulse an den Zähler 2. Dieser zählt aufwärts, bis alle Ausgänge den Wert «1» haben. Beim nächsten Zählimpuls nehmen alle Ausgänge den Wert «0» an. Damit wechselt zum ersten Mal seit Beginn des Entfärbevorganges der zweithöchstwertige Ausgang $Q_{10}$ von «1» auf «0». Diese negative Flanke wird von dem Flankendifferenzierglied 6 bestehend aus Inverter 61, Kondensator 63 und NOR-Gatter 62 differenziert und dadurch am Ausgang vom NOR-Gatter 62 ein kurzer «H»-Impuls erzeugt. Dieser setzt das Flipflop 3 wieder auf den Zustand zurück, bei dem am Schaltungspunkt 36 «L» liegt. Der Taktgenerator 5 wird angehalten und die Stromquelle 18 wird passiv. Der Zählerzustand bei dem alle Ausgänge auf «0» liegen repräsentiert also den entfärbten Zustand der Schicht.

Erst in diesem Zustand des Flipflops wirkt wieder eine Betätigung des Tasters 41: Der Schaltungspunkt 36 wird wieder «H» und der Schaltungspunkt 35 wird wieder «L». Da der Ausgang $Q_{11}$ jetzt jedoch den Wert «0» bzw. «L» hat, liegen am NAND-Gatter 31 zwei ungleiche Signale, so dass die Stromquelle für Entfärben nicht aktiviert wird. Dagegen sind jetzt beide Eingänge am NOR-Gatter 32 «L», so dass die Stromquelle für Färben aktiviert wird. Zugleich wird wieder der Taktgenerator in Betrieb gesetzt und der Zähler läuft weiter aufwärts bis alle Ausgänge mit Ausnahme des höchstwertigen Ausgangs $Q_{11}$ den Wert «1» angenommen haben. Beim nächsten Zählimpuls wird dann der höchstwertige Ausgang $Q_{11}$ «1», alle anderen Ausgänge werden «0». Damit wechselt der zweithöchstwertige Ausgang $Q_{10}$ zum ersten Mal seit Beginn des Färbevorganges von «1» nach «0». Am Ausgang des Flankendifferenziergliedes 6 entsteht damit wieder ein kurzes «H»-Signal, welches das Flipflop 3 wieder zurücksetzt und damit den Färbevorgang und den Taktgenerator 5 abschaltet. Das System ist wieder im Ruhezustand. Die nächste Betätigung des Tasters 41 löst wieder einen Entfärbevorgang aus, da der Ausgang $Q_{11}$ des Zählers 2 wieder auf «H» liegt.

Eine besonders vorteilhafte weitere Ausgestaltung der Erfindung, die am Schaltungspunkt 40 an Stelle des Tasters 41 und des Widerstandes 42 angeschlossen wird, ist in Fig. 2 dargestellt. Dabei wird der Zustand der elektrochromen Schicht automatisch in Abhängigkeit der von einem optischen Sensor 70 gemessenen Helligkeit eingestellt. Der Sensor kann z.B. eine Pindiode oder ein Fototransistor sein. Dessen Signal wird zunächst von dem mit dem Widerstand 72 beschalteten Operationsverstärker 71 verstärkt. Der folgende Operationsverstärker 73 ist als Komparator geschaltet, wobei durch die Belastung des Spannungsteilers bestehend aus den Widerständen 74 bis 76 durch den Komparatorausgang über den Widerstand 77 ein Hystereseverhalten erreicht wird. Die Hysterese und somit die Schaltschwelle lässt sich mit dem Widerstand 74 einstellen. Dabei ist die Schaltschwelle U gegeben durch

$$U = \frac{R_{77}R_{76}}{R_{77}R_{76} + (R_{75}+R_{74})(R_{77}+R_{76})} U_B$$

und die Breite der Hysterese $\pm \Delta U$

$$\pm \Delta U = U \pm \frac{(R_{74}+R_{75})R_{76}}{(R_{74}+R_{75})R_{76} + R_{77}(R_{75}+R_{74}+R_{76})} U_B$$

Diese Gleichungen gelten für symmetrische Betriebsspannungen an dem Operationsverstärker 73. Es ist möglich, diese Betriebsspannungen unsymmetrisch zu wählen; dann müssen die Gleichungen entsprechend abgeändert werden.

Das am Schaltungspunkt 78 liegende Ausgangssignal des Komparators ist «H», wenn die Schicht gefärbt sein soll, sonst «L». Es wird daher mit dem höchstwertigen Ausgangssignal $Q_{11}$ des Zählers 2, das wie oben beschrieben den Färbezustand der Schicht angibt, durch ein Exklusiv-OR-Gatter 79 verknüpft. Dessen Ausgang liegt nur dann auf «H» und löst damit einen Färbe- bzw. Entfärbevorgang aus, wenn das Ausgangssignal des Komparators nicht mit dem höchstwertigen Ausgang des Zählers 2 übereinstimmt. Durch das Flipflop 3 wird ebenso wie bei dem Taster 41 in Fig. 1 ein neuer Färbe- bzw. Entfärbevorgang immer erst dann eingeleitet, wenn der vorhergehende Vorgang abgeschlossen ist. Durch die Hysteresewirkung der beschriebenen Schaltung werden unnötige Regelvorgänge vermieden, wenn die auf den optischen Sensor einfallende Strahlung kleine Änderungen um die Schaltschwelle aufweist.

Ein bevorzugtes Anwendungsgebiet für die beschriebenen Anordnungen sind Sonnenschutzbrillen, insbesondere solche mit optischer Wirkung. Für Brillenträger ist es vorteilhaft, wenn die Brille zur Korrektur der Fehlsichtigkeit zugleich auch eine Sonnenbrille ist. Die beschriebenen Anordnungen bieten gegenüber den bisher bekannten phototropen Gläsern den Vorteil, dass die elektrochromen Schichten wesentlich schneller gefärbt und entfärbt sind. Ausserdem funktionieren sie auch hinter den Windschutzscheiben von Autos. Entsprechend der mit Fig. 1 beschriebenen Anordnung kann die Brille mit einem Schalter zur Auslösung der Färbe- bzw. Entfärbevorgänge ausgerüstet sein. Dieser kann z.B. als Berührungssensor ausgebildet sein, der am Anfang eines Bügels sitzt. Zweckmässigerweise wird die gesamte elektronische Anordnung in Dickschichttechnik oder in einer höheren integrierenden Technik ausgeführt, so dass sie zusammen mit den zur Stromversorgung notwendigen Batterien in der Brillenfassung untergebracht werden kann. Bei dem beschriebenen Ausführungsbeispiel ist der Stromverbrauch, wenn kein Färbe- bzw. Entfärbevorgang stattfindet, so gering, dass auf eine Abschaltung der Batteriespannung während der Zeit, in welcher die Brille nicht benutzt wird, verzichtet werden kann.

Besonders vorteilhaft für Sonnenschutzbrillen ist die mit Fig. 2 beschriebene Anordnung, bei der entsprechend der auf den optischen Sensor einfallenden Bestrahlungsstärke automatisch der richtige Zustand eingestellt wird. Der Vorteil bei Autofahrten durch Tunnel, aber auch beim Betreten oder Verlassen eines Gebäudes etc. ist offensichtlich.

Ein weiteres Anwendungsgebiet der beschriebenen Anordnungen sind optische Geräte, bei denen zeitweise ein Strahlengang definiert geschwächt werden muss. So besteht z.B. bei Mikroskopen der Wunsch, dass das Bild auch bei unterschiedlicher Vergrösserung annähernd die gleiche Helligkeit hat. Hierfür wird an eine geeignete Stelle des Mikroskopstrahlenganges eine planparallele Glasplatte mit einer elektrochromen Schicht gebracht und deren Absorptionsgrad mit einer der beschriebenen Anordnung verändert. So kann z.B. der Momenttaster direkt durch den Vergrösserungswechsler oder durch den Objektivrevolver betätigt werden. Insbesondere bei Mikroskopen mit einer Zoom-Vergrösserungseinrichtung ist die mit Fig. 2 beschriebene automatische Umschaltung durch einen optischen Sensor besonders vorteilhaft. In allen Fällen kann die elektrochrome Schicht auch auf ein schon vorhandenes optisches Teil aufgebracht werden.

Als weiteres Anwendungsgebiet kommen auch optische Anordnungen in Betracht, bei denen sich ein gefordertes unterschiedliches Reflexionsvermögen durch ein unterschiedliches Absorptionsvermögen ersetzen lässt. Ein Beispiel sind abblendbare Autorückspiegel. Die bekannte Ausführung besteht aus einer Glasplatte und einem hinter ihr angeordneten Spiegel, der im Falle eines zu starken Lichteinfalles weggeklappt wird. Diese Lösung hat jedoch Nachteile: Der Spiegel muss von Hand weggeklappt werden, was nur bei Innenspiegeln mit geringem mechanischen Aufwand möglich ist. Eine Automatisierung ist nur mit verhältnismässig grossem Aufwand möglich. Ein unterschiedliches Reflextionsvermögen lässt sich auch durch eine (feststehende) rückseitig verspiegelte Glasplatte erreichen, auf deren Vorderseite eine elektrochrome Schicht aufgebracht ist. Mit der mit Fig. 1 beschriebenen Anordnung kann eine zeitweise Abblendwirkung durch die Betätigung einer Taste erreicht werden, was insbesondere bei Aussenspiegeln einen Vorteil bietet; aber auch generell den Vorteil hat, dass die Taste völlig unabhängig vom Spiegel plaziert werden kann. Mit der mit Fig. 2 beschriebenen Erweiterung wird das Ab- bzw. Aufblenden automatisch durchgeführt, so dass der Fahrer von allen Bedienungsvorgängen entlastet wird.

## Patentansprüche

1. Verfahren zur zeitweisen Erhöhung des Absorptionsgrades von transmittierenden optischen Bauelementen um einen bestimmten Wert, vorzugsweise von Linsen und Filtern, durch eine elektrochrome Schicht, dadurch gekennzeichnet, dass der Färbe- und Entfärbevorgang über eine Flipflopschaltung (3) gestartet und gestoppt wird, dass während eines Färbe- oder Entfärbevorganges in dem einen Zustand der Flipflopschaltung der elektrochromen Schicht von zwei begrenzbaren Stromquellen (18, 19) definierte Ladungsmengen zu- bzw. abgeführt werden und von einem Taktgenerator (5) Zählimpulse an einen Zähler (2) gegeben werden, und dass der Zähler (2) beim Erreichen definierter Werte die Flipflopschaltung (3) in den anderen Zustand schaltet und dadurch der Färbe- oder Entfärbevorgang gestoppt wird.

2. Anordnung zur Durchführung des Verfahrens nach Anspruch 1, dadurch gekennzeichnet, dass die elektrochrome Schicht mit zwei begrenzbaren Stromquellen (18, 19) verbunden ist über welche Ladungen zu- bzw. abgeführt werden, dass die Schalteingänge der Stromquellen (18, 19) über Gatter (31, 32) mit den Ausgängen einer Flipflopschaltung (3) und mit dem höchstwertigen Ausgang ($Q_{11}$) eines Zählers (2) verbunden sind, dass die Flipflopschaltung (3) über ein Flankendifferenzierglied (6) mit dem zweithöchstwertigen Ausgang ($Q_{10}$) des Zählers (2) verbunden ist, dass der Ausgang der Flipflopschaltung (3) mit einem Taktgenerator (5) verbunden ist, welcher während eines Färbe- bzw. Entfärbevorganges Zählimpulse an den Zähler (2) gibt, und dass die Flipflopschaltung (3) mit einer Taste (41) zum Auslösen eines Färbe- bzw. Entfärbevorganges verbunden ist.

3. Anordnung zur Durchführung des Verfahrens nach Anspruch 1, dadurch gekennzeichnet, dass die elektrochrome Schicht mit zwei begrenzbaren Stromquellen (18, 19) verbunden ist über welche Ladungen zu- bzw. abgeführt werden, dass die Schalteingänge der Stromquelle (18, 19) über Gatter (31, 32) mit den Ausgängen einer Flipflopschaltung (3) und mit dem höchstwertigen Ausgang ($Q_{11}$) eines Zählers (3) verbunden sind, dass die Flipflopschaltung (3) über ein Flankendifferenzierglied (6) mit dem zweithöchstwertigen Ausgang ($Q_{10}$) des Zählers (2) verbunden ist, dass der Ausgang der Flipflopschaltung (3) mit einem Taktgenerator (5) verbunden ist, welcher während eines Färbe- bzw. Entfärbevorganges Zählimpulse an den Zähler (2) gibt und dass die Flipflopschaltung (3) mit einem Schaltungsteil für einen optischen Sensor (70) verbunden ist.

4. Anordnung nach Anspruch 3, dadurch gekennzeichnet, dass die Flipflopschaltung (3) über ein Gatter (79) mit dem höchstwertigen Ausgang ($Q_{11}$) des Zählers (2) und einem hysteresebeschalteten Operationsverstärker (73) verbunden ist, dessen Eingang über einen weiteren Operationsverstärker (71) mit dem optischen Sensor (70) verbunden ist.

5. Anordnung nach einem der Ansprüche 2 bis 4, dadurch gekennzeichnet, dass die begrenzbare Stromquelle (18) für den Entfärbestrom auf einen kleineren Strom eingestellt ist als die begrenzbare Stromquelle (19) für den Färbestrom.

6. Anordnung nach einem der Ansprüche 2 bis 5, dadurch gekennzeichnet, dass für die begrenzbaren Stromquellen (18, 19) Transistoren (14, 15) in Emitterschaltung vorgesehen sind, welche über Basiswiderstände (16, 17) angesteuert werden.

7. Verwendung der Anordnung nach einem der Ansprüche 2 bis 6 für Sonnenschutzbrillen.

8. Verwendung nach Anspruch 7, dadurch gekennzeichnet, dass die elektronischen Bauelemente in Dickschichttechnik oder einer höher integrierenden Technik ausgeführt sind und zusammen mit den zur Stromversorgung notwendigen Batterien in eine Brillenfassung eingebaut sind.

9. Verwendung der Anordnung nach einem der Ansprüche 2 bis 6 für Mikroskope zum Erreichen annähernd gleicher Bildhelligkeit bei unterschiedlicher Vergrösserung.

10. Verwendung der Anordnung nach einem der Ansprüche 2 bis 6 für abblendbare Autorückspiegel.

## Claims

A method for temporarily increasing the absorptance of optical transmitting components in a well-defined manner, preferably lenses and filters, by means of an electrochromic layer, characterized by the fact, that the coloring and decoloring process is started and terminated via a flip-flop circuit (3), that during a coloring or decoloring process in one state of the flip-flop circuit the electrochromic layer charges are fed to resp. removed from two sources of limitable current (18, 19) and counting pulses are fed by a clock generator (5) to a counter (2), and that the counter (2) actuates the flip-flop circuit (3) into the other state when defined values are reached and by that terminates the coloring or decoloring process.

2. An arrangement for carrying out the method of claim 1, characterized by the fact that the electrochromic layer is connected to two sources of limitable current (18, 19) via which charges are fed and removed, that the switch inputs of the current sources (18, 19) are connected via gates (31, 32) to the outputs of a flip-flop circuit (3) and to the highest-order output ($Q_{11}$) of a counter (2), that the flip-flop circuit (3) is connected via a flank-differentiating member (6) to the output ($Q_{10}$) of second-highest-order of the counter (2), that the output of the flip-flop circuit (3) is connected to a clock generator (5) which delivers counting pulses to the counter (2) during a coloring or decoloring process, and that the flip-flop circuit (3) is connected with a key (41) for starting a coloring or decoloring process.

3. An arrangement for carrying out the method of claim 1, characterized by the fact that the electrochromic layer is connected to two sources of limitable current (18, 19) via which charges are fed and removed, that the switch inputs of the current sources (18, 19) are connected via gates (31, 32) to the outputs of a flip-flop circuit (3) and to the highest-order output ($Q_{11}$) of a counter (2), that the flip-flop circuit (3) is connected via a flank differentiating member (6) with the output ($Q_{10}$) of second-highest-order of the counter (2), that the output of the flip-flop circuit (3) is connected to a clock generator (5) which delivers counting pulses to the counter (2) during a coloring or decoloring process, and that the flip-flop circuit (3) is connected to a circuit part for an optical sensor (70).

4. An arrangement according to claim 3, characterized by the fact that the flip-flop circuit (3) is connected via a gate (79) to the highest order output ($Q_{11}$) of the counter (2) and to a hysteresis-wired operational amplifier (73) whose input is connected to the optical sensor (70) via another operational amplifier (71).

5. An arrangement according to any of claims 2 to 4, characterized by the fact that the source of limitable current (18) for the decoloring current is set on a smaller current than the source of limitable current (19) for the coloring current.

6. An arrangement according to any of claims 2 to 5, characterized by the fact that for the sources of limitable current (18, 19) transistors (14, 15) are provided in the emitter circuit, they being controlled via base resistors (16, 17).

7. Use of the arrangement according to any of claims 2 to 6 for sunglasses.

8. Use according to claim 7, characterized by the fact that the electronic components are developed in thick-layer technique or a higher integrating technique and are installed in the frame of the glasses together with the batteries necessary for supplying the current.

9. Use of the arrangement according to any of claims 2 to 6 for microscopes in order to obtain approximately identical image brightness upon different magnification.

10. Use of the arrangement according to any of claims 2 to 6 for dimmable automobile rearview mirrors.

**Revendications**

1. Procédé pour augmenter de temps en temps, d'une valeur déterminée, le facteur d'absorption de composants optiques à transmission, de préférence de lentilles et de filtres, au moyen d'une couche électrochrome, caractérisé en ce que le processus de coloration et de décoloration est déclenché et arrêté au moyen d'un circuit basculeur (3), en ce que, pendant un processus de coloration ou de décoloration, dans l'un des états du circuit basculeur, des quantités de charge définies sont amenées à la couche électrochrome ou sont évacuées de celle-ci par deux sources de courant (18, 19), pouvant être limitées, et des impulsions de comptage sont délivrées par une horloge (5) à un compteur (2), et que, en atteignant des valeurs définies, le compteur (2) fait passer le circuit basculeur (3) à l'autre état, ce qui arrête le processus de coloration ou de décoloration.

2. Dispositif pour la mise en œuvre du procédé selon la revendication 1, caractérisé en ce que la couche électrochrome est connectée à deux sources de courant (18, 19), pouvant être limitées, par lesquelles sont amenées ou évacuées des charges, que les entrées de commande des sources de courant (18, 19) sont reliées à travers des portes (31, 32) aux sorties d'un circuit basculeur (3), ainsi qu'à la sortie de la position la plus élevée ($Q_{11}$) d'un compteur (2), que le circuit basculeur (3) est relié à travers un élément diffirenciateur de flancs (6) à la sortie de la deuxième position la plus élevée ($Q_{10}$) du compteur (2), que la sortie du circuit basculeur (3) est connectée à une horloge (5) qui délivre des impulsions de comptage du compteur (2) pendant un processus de coloration respectivement de décoloration, et que le circuit basculeur (3) est connecté à une touche (41) pour le déclenchement d'un processus de coloration respectivement de décoloration.

3. Dispositif pour la mise en œuvre du procédé selon la revendication 1, caractérisé en ce que la couche électrochrome est connectée à deux sources de courant (18, 19), pouvant être limitées, par lesquelles sont amenées ou évacuées des charges, que les entrées de commande des sources de courant (18, 19) sont reliées à travers des portes (31, 32) aux sorties d'un circuit basculeur (3), ainsi qu'à la sortie de la position la plus élevée ($Q_{11}$) d'un compteur (2), que le circuit basculeur (3) est relié à travers un élément différenciateur de flancs (6) à la sortie de la deuxième position la plus élevée ($Q_{10}$) du compteur (2), que la sortie du circuit basculeur (3) est connectée à une horloge (5) qui délivre des impulsions de comptage au compteur (2) pendant un processus de coloration respectivement de décoloration, et que le circuit basculeur (3) est connecté à une partie du montage pour un capteur optique (70).

4. Dispositif selon la revendication 3, caractérisé en ce que le circuit basculeur (3) est relié à travers une porte (79) à la sortie de la position la plus élevée ($Q_{11}$) du compteur (2) et à un amplificateur opérationnel (73) doté d'hystérésis, dont l'entrée est reliée à travers un autre amplificateur opérationnel (71) au capteur optique (70).

5. Dispositif selon une des revendications 2 à 4, caractérisé en ce que la source (18) pour le courant de décoloration est réglée à une intensité de courant plus faible que la source (19) pour le courant de coloration.

6. Dispositif selon une des revendications 2 à 5, caractérisé en ce que des transistors (14, 15) dans un montage à émetteur commun sont prévus pour les sources de courant (18, 19), les transistors étant attaqués à travers des résistances de base (16, 17).

7. Utilisation du dispositif selon une des revendications 2 à 6 pour lunettes de soleil.

8. Utilisation selon la revendication 7, caractérisée en ce que les composants électroniques sont réalisés selon la technique à couches épaisses, ou selon une technique à plus haute intégration, et sont incorporés, ensemble avec les piles nécessaires à l'alimentation électrique, dans une monture de lunettes.

9. Utilisation du dispositif selon une des revendications 2 à 6 pour microscopes, dans le but d'obtenir une luminosité d'image approximativement égale avec des grossissements différents.

10. Utilisation selon une des revendications 2 à 6 pour rétroviseurs d'automobile dont la luminosité peut être réduite.

Fig.1

# Fig. 2